# DEMANDE DE BREVET EUROPEEN

(11) **EP 3 076 244 A1**
(43) Date de publication de la demande: **05.10.2016**
(21) Numéro de dépôt: 16159914.7
(22) Date de dépôt: 11.03.2016
(51) Int. Cl.: G04B 13/02, B29C 45/44, B29C 33/52, G04B 31/00, G04B 31/06, F16C 11/04, F16C 33/20, F16C 11/06, G04B 15/06

(54) **DISPOSITIF D'AMORTISSEMENT DE CHOCS POUR PIECES ROTATIVES**

(30) Priorité: 11.03.2015 CH 3292015
(71) Demandeur: CSEM Centre Suisse d'Electronique et de Microtechnique SA - Recherche et Développement, 2002 Neuchâtel (CH)
(72) Inventeur: Cardot, Francis, 2000 Neuchâtel (CH)
(74) Mandataire: GLN SA

(57) **Abrégé**

L'invention concerne un dispositif (1) d'amortissement de chocs comportant une cage (2) et une butée (3) mobile par rapport à la cage, caractérisé en ce que la butée comporte une tige saillante (4) par rapport à ladite cage et d'une extrémité duquel est solidaire une protubérance (5) encapsulée avec jeu dans ladite cage, la protubérance et/ou la cage étant conformées pour amortir un choc appliqué à la tige de la butée.

## Description

### Domaine technique

La présente invention se rapporte au domaine des microtechniques. Elle concerne, plus particulièrement, un dispositif d'amortissement de chocs comportant d'une butée.

### Etat de la technique

Dans le domaine de la micromécanique, en particulier dans celui de l'horlogerie, on a des organes mobiles qui, le plus fréquemment, sont des organes pivotants montés sur des axes dont les extrémités présentent une très faible section afin de réduire les frottements lors de leur pivotement. Les extrémités de ces axes sont fragiles et risquent de se rompre dans le cas où l'organe pivotant subit un choc. C'est pourquoi ces axes sont associés à des paliers amortisseurs dits « antichocs » qui permettent un léger déplacement de l'axe en cas de choc afin que celui-ci vienne en appui sur une partie de l'axe de plus forte section. On connait notamment le document CH705908 qui donne l'exemple d'un tel palier antichoc.

Il a également été proposé dans des domaines éloignés de l'horlogerie et la microtechnique, par exemple dans le document US 4,917,846 de réaliser des paliers de support d'éléments tubulaires présentant un faible jeu afin de procurer une liberté de mouvement en rotation suivant l'axe des éléments tubulaires supportés mais restreignant les libertés de mouvements en translation suivant cet axe ou perpendiculairement à celui-ci, de même que les inclinaisons par rapport à cet axe. Le faible jeu est procuré par dissolution d'une couche sacrificielle préalablement revêtue sur l'extrémité à supporter des éléments tubulaires. Toutefois ces paliers sont fragiles et ne permettent en aucune façon d'absorber des chocs induisant des déplacements des éléments tubulaires supportés en translations ou en inclinaison par rapport à leur axe.

Par ailleurs, on a plus récemment vu se développer, des pièces pivotantes suspendues à des bras flexibles et qui oscillent autour d'un axe virtuel. Le document EP2037335 donne l'exemple d'une ancre suspendue selon ce principe. Ces pièces possèdent généralement des bras de suspension d'une grande finesse conçus pour fléchir dans un plan particulier et selon une amplitude définie mais ne sont pas prévus pour supporter des mouvements selon d'autres directions ou d'une trop grande amplitude. Par construction, les paliers antichocs de l'art antérieur ne peuvent être adaptés à ces pièces à pivot virtuel.

La présente invention a pour but de proposer un dispositif d'amortissement de chocs comportant une butée antichoc et adapté spécifiquement à la protection de pièces rotatives suspendues ou portées sur un axe matériel de rotation.

### Divulguation de l'invention

De façon plus précise, et selon un premier aspect, l'invention concerne un dispositif d'amortissement de chocs comportant une cage et une butée mobile par rapport à la cage. Ce dispositif est caractérisé par le fait que la butée comporte une tige saillante par rapport à ladite cage et d'une extrémité de laquelle est solidaire une protubérance encapsulée avec jeu dans ladite cage, la protubérance et/ou la cage étant conformées pour amortir un choc appliqué à la tige de la butée.

Le dispositif d'amortissement de l'invention procure ainsi un ensemble de butée antichocs possédant jusqu'à 6 degrés de liberté dans l'espace, ce qui permet de limiter les mouvements d'une pièce rotative et/ou oscillante en cas de chocs et d'absorber ces chocs par interaction entre la protubérance de la butée et la cage du dispositif d'amortissement, lesquels sont avantageusement conformés pour absorber l'énergie cinétique et potentielle de la butée consécutivement à un choc transmis à la tige de celle-ci.

On entend dans le cadre de la présente invention que la protubérance et/ou la cage sont conformées pour amortir un choc appliqué à la tige de la butée par le fait que ladite protubérance et ladite cage présentent respectivement des formes et/ou des matières permettant lors de l'entrée en contact de la protubérance et de la cage consécutivement à un choc d'absorber ou dissiper l'énergie induite par le choc.

Selon différentes variantes de réalisation le dispositif d'amortissement de la présente invention est tel que :
- la butée est encapsulée dans ladite cage avec jeu dans au moins 1 degré de liberté, de préférence au moins 3 degrés de liberté,
- la protubérance et sa tige sont réalisées de façon monolithique,
- la cage est constituée d'un matériau viscoélastique, de préférence en polymère viscoélastique, ou encore en matériau thermoformable,
- la cage présente une structure composite comportant au moins deux couches, une couche de la cage étant de préférence réalisée dans un matériau anti friction,
- la dispositif comporte un organe de freinage agencé pour modifier le jeu entre la protubérance et la cage, de préférence un organe de freinage comprenant un actionneur piézoélectrique.

Dans un second objet, la présente invention concerne également une pièce d'horlogerie comportant un dispositif d'amortissement de chocs tel que précédemment définit.

Un troisième objet de l'invention concerne par ailleurs un procédé de fabrication d'un dispositif d'amortissement de chocs selon le premier objet, ce procédé comportant les étapes suivantes :
i. former une butée comportant une tige et une protubérance solidaire d'une extrémité de ladite tige,
ii. revêtir la protubérance et au moins une portion de sa tige d'un matériau soluble sélectivement par rapport au matériau formant la protubérance,
iii. Plonger la butée dans une quantité déterminée d'une matière fluide durcissable jusqu'à recouvrir la protubérance et la au moins une portion de sa tige revêtues d'un matériau soluble sélectivement,
iv. Solidifier la matière durcissable pour former une cage autour de la protubérance et du matériau soluble sélectivement de telle sorte que la tige de la butée soit saillante par rapport à ladite cage,
v. dissoudre sélectivement le matériau soluble.

Dans une variante du procédé de l'invention, l'épaisseur du matériau soluble déposée à l'étape ii) est comprise entre 1 et 500 microns.

Selon une autre variante de réalisation du procédé de l'invention celui-ci comporte en outre une étape de formation d'une couche de revêtement autour du matériau soluble sélectivement intervenant avant l'étape iii).

Un dernier objet de l'invention concerne enfin une pièce intermédiaire comprenant obtenue après l'étape ii) du procédé de fabrication de l'invention ou encore une pièce intermédiaire obtenue après l'étape iv) du procédé de fabrication de l'invention tel que précédemment définit. Cette pièce intermédiaire constitue un ensemble monolithique comprenant la cage et la butée parfaitement assemblées et ajustées l'une par rapport à l'autre via les éléments sacrificiels entre les deux, ce qui permet de s'affranchir de contrainte d'assemblage et d'ajustement de la cage autour de la butée par des procédés classiques.

### Brève description des dessins

D'autres détails de l'invention apparaîtront plus clairement à la lecture de la description qui suit, faite en référence aux dessins annexés dans lesquels :
- les figures 1 et 2 représentent une vue en coupe d'un dispositif d'amortissement selon l'invention dont la cage est solidaire d'un bâti ou support et la butée est mobile dans la cage,
- la figure 3 représente les positions limites que peut occuper la butée dans le dispositif d'amortissement de l'invention de la figure 1,
- les figures 4 et 5 représentent des variantes de réalisation d'une butée d'un dispositif d'amortissement selon l'invention,
- les figures 6 à 13 présentent les étapes de fabrication d'un dispositif d'amortissement selon l'invention,
- les figures 14 à 17 présentent des variantes d'exécution d'une butée d'un dispositif d'amortissement selon l'invention.

### Mode de réalisation de l'invention

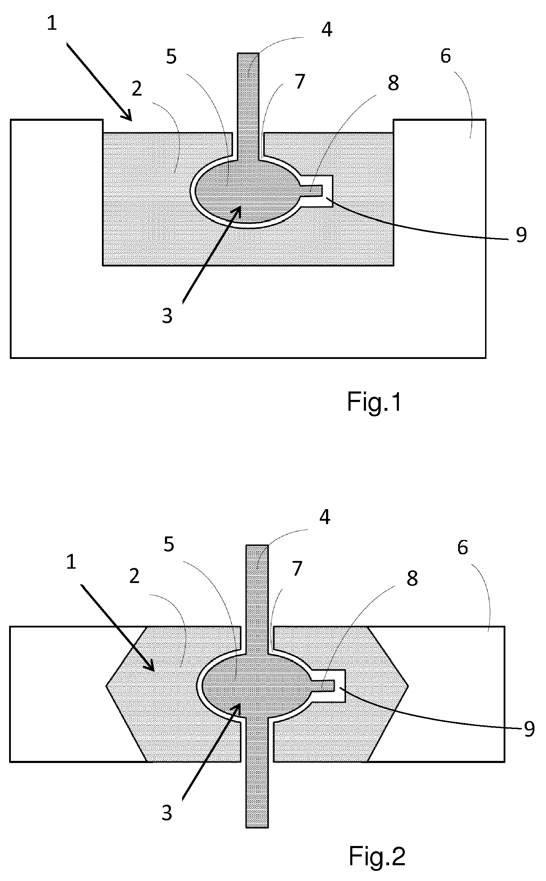

On a représenté sur les figures 1 à 5 et 14 à 17, différentes variantes de réalisation d'un dispositif 1 d'amortissement de chocs comportant une cage 2 et une butée 3 mobile par rapport à la cage 2. La butée 3 comporte une tige 4 saillante à l'extérieur de la cage 2 dont est solidaire à une extrémité inférieure située dans la cage 2 une protubérance 5 encapsulée avec jeu dans ladite cage 2, laquelle est fixée à un support 6 formant bâti ou rapporté sur un corps annexe formant lui-même bâti.

De préférence, la cage 2 pourra être réalisée dans un matériau viscoélastique tel le polydimethylsiloxane (PDMS) qui a pour propriété d'amortir les chocs en absorbant une partie de leur énergie.

La butée 3 et sa tige 4 sont quant à elles par exemple réalisées de façon monolithique dans un métal ou alliage métallique, un matériau synthétique tel qu'un polymère (par exemple du polyétheréthercétone (PEEK), du polytétrafluoroéthylène (PTFE), du polycarbonate), en silicium ou encore en céramique.

Dans la suite de la description, on considérera un repère orthonormé (X, Y, Z) lié à la cage 2 du dispositif 1 d'amortissement de chocs de l'invention, et dans le lequel la direction verticale Z est confondue la tige 4 de la butée 3 du dispositif 1 de l'invention. La tige 4 de la butée 3 du dispositif 1 de l'invention, peut subir des mouvements selon les 6 degrés de libertés, en translation le long des trois axes X, Y, Z, longitudinal Tx, transversal Ty et vertical Tz ainsi qu'en rotation autour de ces mêmes axes, Rx, Ry et Rz par rapport à la cage 2 dudit dispositif 1.

La protubérance 5 présente dans les exemples représentés une forme de révolution selon l'axe Z, comme par exemple une ellipsoïde dont l'axe Z est l'axe de symétrie. La protubérance 5 est encapsulée dans la cage 2 avec un jeu 7 qui permet à la tige 4 de pivoter en conditions normales sans contact entre la protubérance 5 et la cage 2.

On veillera de préférence à réaliser la butée 3 en respectant un dimensionnement préférentiel, notamment proportionnel de la tige et de la protubérance. A titre d'exemple non limitatif de réalisation, pour une tige 4 de forme cylindrique et de diamètre d compris entre 0,1 mm et 2 mm, la protubérance 5 présentera alors de préférence une plus grande dimension D telle que 3d ≤ D≤ 40d, que sa forme soit une forme de révolution, par exemple de section verticale contenant l'axe Z de la tige 4 elliptique ou circulaire.

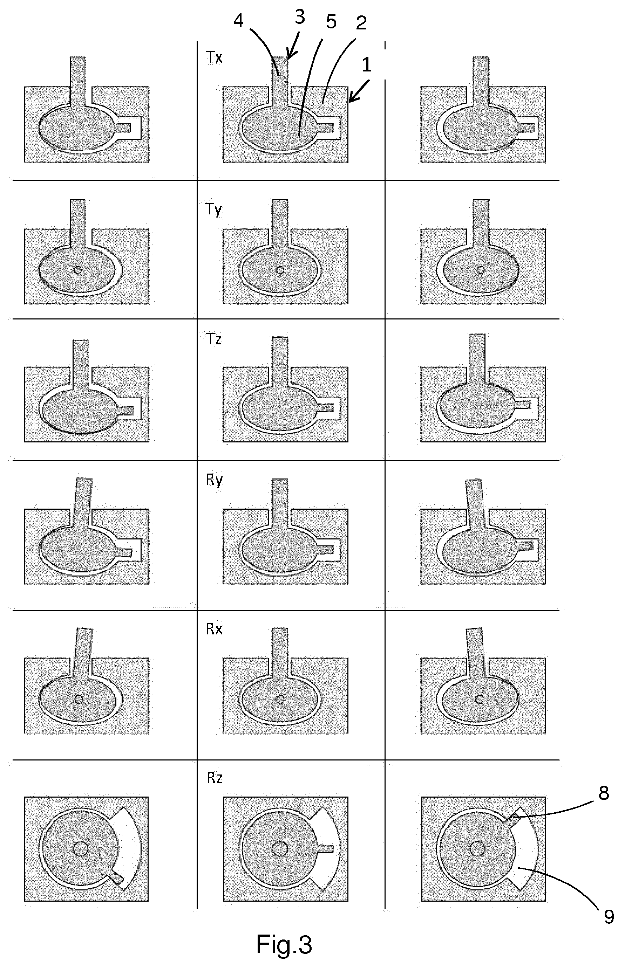

La protubérance 5 peut également comporter, comme représenté sur les figures 1 à 4 un doigt 8 libre de se déplacer dans une cavité 9 lors du pivotement autour de l'axe Z vertical. Le doigt 8 et la cavité 9, également visibles sur la figure 3, ont pour fonction de limiter l'amplitude de la rotation de la tige 4 autour de l'axe Z. Ce doigt 8 est notamment utile pour supporter avec amortissement un organe pivotant de type oscillant, comme un balancier ou une ancre d'une pièce d'horlogerie, par exemple, mais n'est pas présent pour un organe pivotant sur plus de 360°. Bien entendu, en l'absence du doigt 8, on libère alors totalement la rotation autour de l'axe Z, procurant de la sorte un dispositif d'amortissement de chocs dont la butée 3 possède 5 degrés de liberté.

Lorsque la protubérance 5 de la butée comporte un tel doigt 8, celui-ci présentera par exemple une longueur l telle que d≤ l≤ 20d, soit entre 0,2 mm et 2 mm, la cavité 9 couvrant elle une plage angulaire autour de l'axe Z comprise entre 5° et 360°.

Dans le mode de réalisation de la figure 2, la protubérance 5 de la butée 3 est formée le long de la tige 4 et non plus à une extrémité de celle-ci comme dans l'exemple de la figure 1. Cette configuration permet par exemple, de réaliser une butée 3 dans lequel la tige 4 constitue un axe de pivot réel (par opposition à un pivot virtuel) monté entre deux paliers.

La figure 3 représente les différentes positions extrêmes que peut occuper la butée 3 du dispositif 1 d'amortissement de l'invention par rapport à sa cage 2 lorsque celle-ci est fixe sur un bâti en cours d'utilisation. La colonne centrale représente une position neutre, correspondant à des conditions d'utilisation normales, dans laquelle la protubérance 5 ne touche pas la cage 2. Les colonnes de droite et de gauche correspondent aux positions limites respectivement négatives et positives que peut occuper la protubérance 5 en référence à la cage 2 suite à un déplacement en translation suivant les axes X, Y et Z et suite à une rotation autour de ces mêmes axes.

Lors d'un fonctionnement normal, la tige 4 peut pivoter librement selon la rotation Rz entre les positions limites représentées dans les fenêtres en bas à gauche et en bas à droite de la figure 3.

Quand la tige 4 subit un choc, la protubérance 5 se déplace dans la cage 2 jusqu'à venir en appui sur la paroi interne de la cage 2. Ainsi, quel que soit le mouvement de translation ou de rotation selon les degrés de liberté et bien entendu quelle que soit la combinaison de ces mouvements, le déplacement de l'organe pivotant est limité par la butée 3.

Dans le cas où la tige 4 est liée à un dispositif de suspension à bras flexibles, la déformation que subissent les bras flexibles est elle-même limitée ce qui permet d'éviter qu'ils ne rompent.

Ainsi, dans le cas de pièces de mécanismes horlogers où le balancier est lié au bâti par l'intermédiaire d'un ou plusieurs dispositifs 1 d'amortissement selon l'invention, on limite également les perturbations d'isochronisme ou de marche du mouvement.

Par ailleurs, dans le cas d'un organe oscillant pivoté sur un axe réel lié à la tige 4 de la butée 3 du dispositif 1 de l'invention, les efforts dus aux chocs sont amortis par la butée 3 contre la cage 2 plutôt que par les extrémités fragiles de l'axe de rotation.

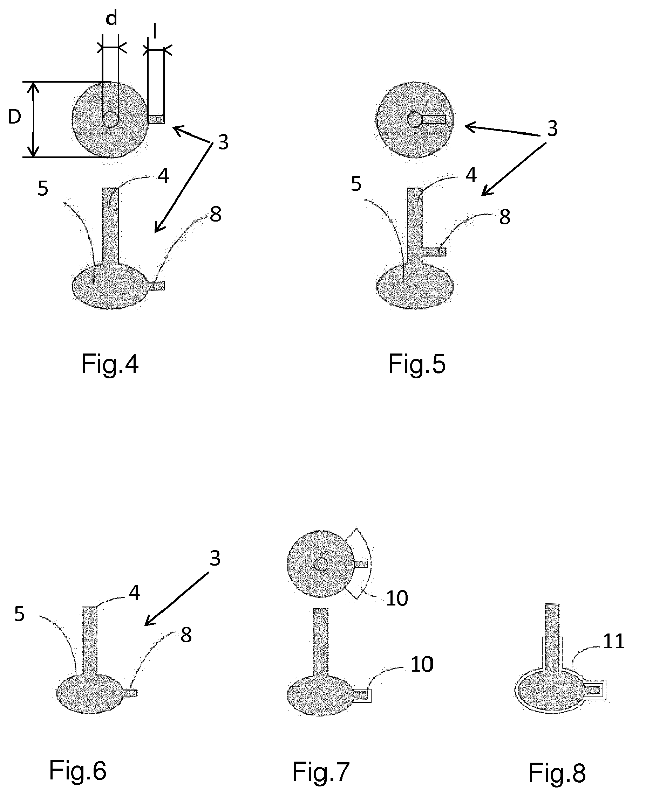

La figure 5 présente une variante de la figure 4 dans laquelle le doigt 8 de la butée 3 est situé directement sur la tige 4 plutôt que sur la protubérance 5. Dans d'autres configurations non représentées, la butée 3 peut ne pas avoir de doigt et ne pas limiter les mouvements Rz en rotation autour de l'axe Z.

La protubérance 5 peut également avoir une forme sphérique et limiter seulement les mouvements en translation Tx, Ty et Tz.

La protubérance 5 peut encore présenter une forme qui n'est pas une forme de révolution telle qu'une forme parallélépipédique ou cubique et dans ce cas n'autoriser que des mouvements en translation Tx, Ty et Tz et pas de rotation Rx, Ry, Rz.

De façon remarquable, le dispositif 1 d'amortissement de chocs selon l'invention propose une butée 3 unique coopérant avec la cage 2, la protubérance et/ou la cage étant conformées pour limiter l'amplitude des mouvements selon les 6 degrés de liberté mais également d'absorber une partie de l'énergie induite par un choc appliqué à l'axe de la butée 3 comme cela sera expliqué plus loin.

En pratique, le dispositif 1 d'amortissement de chocs de l'invention trouve une application privilégiée dans le domaine de l'horlogerie, où il procure une solution d'amortissement des chocs alternative aux paliers antichocs et autres systèmes de suspension par bras flexibles supportant des mobiles rotatifs montés pivotants autour d'un axe réel ou immatériel en référence à un bâti, par exemple une platine d'une pièce d'horlogerie.

Le dispositif 1 de l'invention est notamment avantageux en application au montage de mécanismes oscillants, tels les balanciers de montres mécaniques.

En effet, en opérant une liaison solidaire de la cage 2 du dispositif 1 d'amortissement de l'invention à un bâti d'une pièce d'horlogerie ou une pièce rapportée sur celui-ci d'une part et une liaison de l'axe 4 de butée 3 du dispositif 1 d'amortissement à un mobile oscillant de ladite pièce d'horlogerie d'autre part on réalise ainsi une liaison amortissante à 6 degrés de libertés dans l'espace en référence au bâti. Ainsi, lorsque la pièce d'horlogerie subit une forte accélération, typiquement lors d'un choc, le mobile oscillant de la pièce d'horlogerie subit des contraintes qui, si elles ne sont pas limitées, peuvent provoquer la rupture d'un élément mécanique de liaison, notamment de l'axe matériel de rotation, ou, dans le cas d'un mobile oscillant suspendu, provoquer des contraintes fortes dans les bras flexibles qui relient l'organe oscillant au bâti. Ces contraintes résultent des déplacements relatifs de l'organe oscillant par rapport au bâti qui peuvent intervenir selon les 6 degrés de liberté.

Les figures 6 à 15 illustrent les étapes successives permettant de fabriquer un dispositif 1 d'amortissement selon l'invention.

Comme représenté à la figure 6, on se procure dans une première étape la butée 3 comportant sa tige 4, sa protubérance 5 et un doigt 8. Une telle butée est avantageusement formée de matière par usinage, moulage, impression 3D ou tout autre moyen.

Dans une deuxième étape représentée aux figures 7 et 8, la protubérance 5, une portion inférieure de la tige 4 liée à la protubérance 5 et le doigt 8 sont recouverts d'un matériau soluble sélectivement par rapport aux autres matériaux composant l'organe pivotant, la cage et le support. De préférence, ce matériau sera soluble à l'eau et pourra par exemple, être constitué à base d'alcool polyvinylique ou de polysaccharides. Le doigt 8 est tout d'abord recouvert d'un élément sacrificiel 10 par injection ou par moulage. Cet élément à la forme d'un secteur annulaire dont l'angle d'ouverture correspond sensiblement au débattement maximum d'oscillation souhaité autour de l'axe de pivot. L'extrémité de la tige 4, la protubérance 2 et l'élément sacrificiel 10 sont ensuite recouverts d'une couche sacrificielle 11 dont l'épaisseur pourra de préférence être comprise entre 1 et 500 micromètres. L'élément sacrificiel 10 et la couche 11 sacrificielle sont tous deux composés d'un matériau soluble sélectivement pouvant être identique.

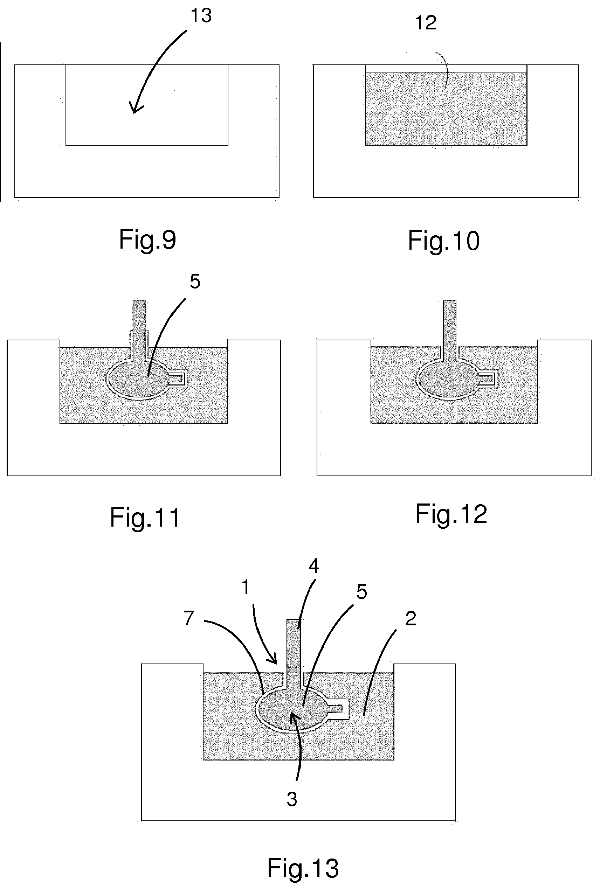

Dans une troisième étape représentée aux figures 9 à 11, on réalise la cage 2 destinée à encapsuler la protubérance 5. Pour cela, on verse un fluide durcissable 12 dans un moule 13 et on y immerge les parties de la butée 3 préalablement recouvertes de l'élément 10 et de la couche 11 sacrificiels (en l'espèce la protubérance 5, la partie inférieure de la tige 4 et le doigt 8).

On laisse ensuite le fluide durcissable 12 se solidifier, notamment par polymérisation, autour de la protubérance 5 et de l'élément 10 et de la couche 11 sacrificiels, ce qui permet de former la cage 2.

Dans une dernière étape représentée aux figures 12 et 13, les matériaux solubles sélectivement formant les élément 10 et couche 11 sacrificiels sont dissouts en créant un jeu 7 entre la protubérance 5 et la cage 2. La dissolution de l'élément sacrificiel 10 peut être réalisée après celle de la couche 11 ou simultanément, en fonction de leur nature.

Le fluide durcissable 12 utilisé pour remplir le moule 13 peut être un polymère viscoélastique en phase liquide non polymérisé, par exemple un polydimethylsiloxane, un polyacétate de vinyle ou un polyuréthane.

Lors de la réalisation de la cage 2, l'homme du métier prévoira un posage ou des éléments de positionnements nécessaires, pour assurer que la protubérance 5, et donc la tige 4, soient positionnés correctement, par rapport au moule 13 et, le cas échéant, par rapport au bâti sur lequel la cage 2 doit être formée.

La formation de la cage 2 peut se faire in situ, c'est-à-dire directement sur le bâti recevant l'organe pivotant ou oscillant à relier à la tige 4 de la butée 3, le moule 13 étant destiné à maintenir la cage 2. La dissolution de la couche sacrificielle 11 permet d'obtenir un jeu 7 correspondant à l'épaisseur du matériau dissout et de s'affranchir des tolérances de montage et de fabrication des autres pièces. Ce procédé permet d'obtenir un jeu 7 réduit et uniforme.

Alternativement, la formation de la cage 2 peut se faire au préalable dans un moule 13, qui peut être réutilisé ou servir d'interface pour insérer la cage 2 dans le bâti. On peut aussi prévoir de réaliser la cage 2 dans un matériau thermoformable, pour lui donner sa forme définitive après qu'elle a été insérée sur son support et avant la dissolution des matériaux solubles sélectivement permettant ainsi de maitriser le jeu 7 de la même façon que par un montage in situ.

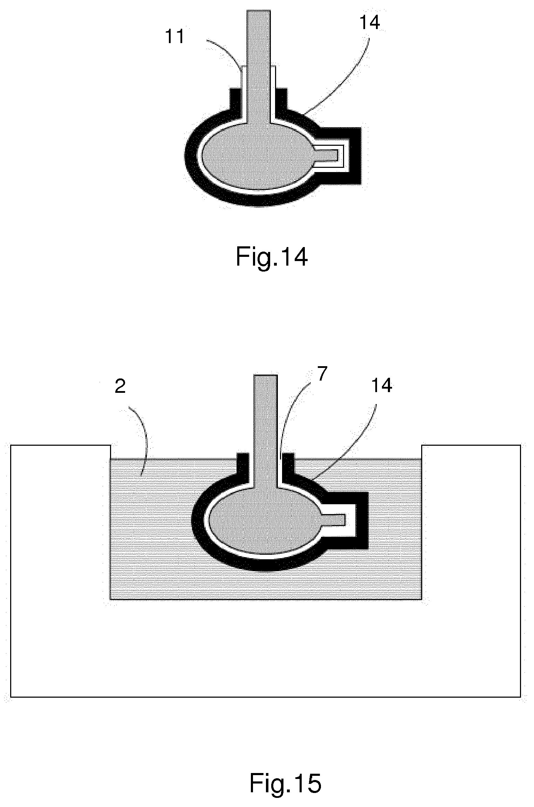

Dans un autre mode de réalisation dont le procédé de fabrication est présenté aux figures 14 et 15, la cage 2 présente une structure composite comportant au moins deux couches de nature différente. Une ou plusieurs couches additionnelles peuvent être formées au niveau de la face interne de la cage 2 à l'aide de matériaux résistants à l'étape de dissolution de la couche sacrificielle 11 afin, par exemple, d'améliorer les conditions tribologiques entre la cage et la protubérance.

Dans l'étape de fabrication correspondant à la figure 14, une couche additionnelle 14 est formée autour de la couche sacrificielle 11 avant l'immersion dans la matière fluide durcissable 12. La cage 2 obtenue après solidification de la matière 12 et dissolution du matériau soluble sélectivement est représentée à la figure 15. La couche additionnelle 14 est devenue le revêtement interne de la cage 2. La couche additionnelle 14 peut par exemple, être réalisée dans un matériau anti friction comme un polymère époxy ce qui permet de réduire les frottements de l'organe pivotant dans la butée. Inversement le matériau obtenu par durcissement de la matière fluide 12 peut être plus dur que celui de la couche additionnelle 14 qui peut être un matériau viscoélastique.

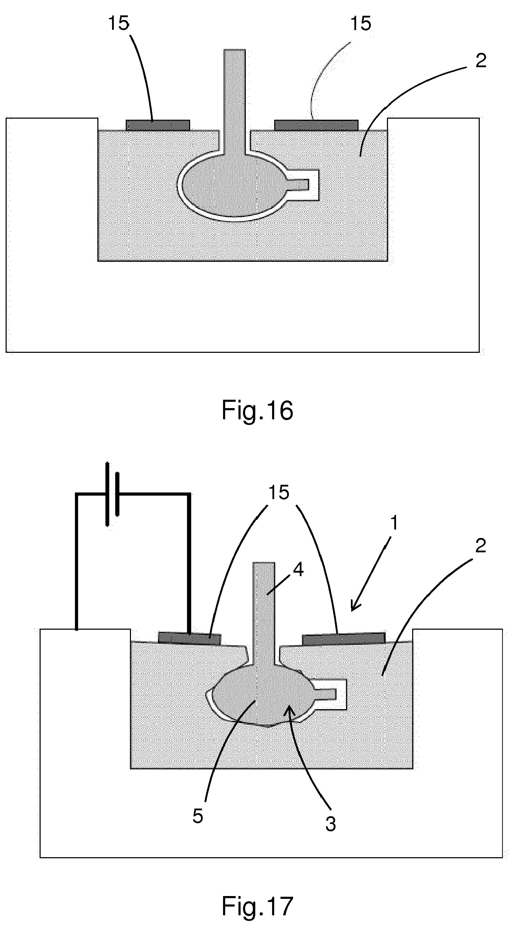

Dans un autre mode de réalisation de l'invention, la butée 3 comporte un dispositif de freinage agencé pour modifier, le cas échéant pour supprimer, le jeu entre la cage 2 et la protubérance 5. La fonction de freinage est obtenue par le changement de morphologie d'une des couches composant la cage 2 sous l'action de la chaleur, de l'humidité, d'un composé chimique, d'un champ magnétique ou d'un courant électrique associé à un effet piézoélectrique. En particulier, la cage 2 peut être formée soumise à un effet piézoélectrique de telle sorte qu'en y appliquant une tension électrique par le biais d'électrodes 15, comme illustré sur les figures 16 et 17 ladite cage agit comme un actionneur piézo-électrique. L'application, le cas échéant sélective, d'une tension à la cage 2 induit une contraction de la matière constitutive de la cage 2 autour de la protubérance 5, le cas échéant de la base de la tige 4 et/ou le doigt 8, réduisant ou supprimant le jeu localement entre la cage et la butée.

Les exemples proposés ci-dessus font référence à un organe pivotant ou oscillant lié à la tige 4 de la butée 3 du dispositif 1 d'amortissement de chocs de l'invention, mais l'homme du métier pour les généraliser à un organe mobile, par exemple en translation. Dans d'autres modes de réalisation non représentés, l'organe pivotant est susceptible de se déplacer par rapport au bâti le long d'une trajectoire, sur une surface ou dans un volume prédéfinis. Comme pour les modes de réalisation présentés, la butée 3 est obtenue en plaçant un élément sacrificiel 10, 11 au contact de la protubérance 5 dans le but de former une cage 2 dans laquelle la protubérance 5 de la butée 3 pourra se déplacer de façon limitée. La forme de l'élément sacrificiel combinée à celle de la protubérance permet de réaliser tous types de butées interdisant le déplacement de la butée en référence à la cage 2, donc au bâti selon une combinaison quelconque de degrés de libertés ou d'en limiter l'amplitude.

Ainsi est proposé un dispositif d'amortissement de chocs doté d'une butée unique qui permet de limiter les déplacements d'un organe pivotant ou oscillant lié à la butée dans tous les degrés de liberté. La butée peut avantageusement être utilisée pour un organe pivotant à pivot virtuel.

## Revendications

1. Dispositif (1) d'amortissement de chocs comportant une cage (2) et une butée (3) mobile par rapport à la cage (2), **caractérisé en ce que** la butée (3) comporte une tige (4) saillante par rapport à ladite cage et d'une extrémité de laquelle est solidaire une protubérance (5) encapsulée avec jeu dans ladite cage (2), la protubérance (5) et/ou la cage (2) étant conformées pour amortir un choc appliqué à la tige (4) de la butée.

2. Dispositif (1) d'amortissement de chocs selon la revendication 1, **caractérisé en ce que** la butée (3) est encapsulée dans ladite cage (2) avec un jeu (7) dans au moins 1 degré de liberté, de préférence au moins 3 degrés de liberté.

3. Dispositif (1) d'amortissement de chocs selon la revendication 1 ou 2, **caractérisé en ce que** la protubérance (5) et la tige (4) sont réalisées de façon monolithique.

4. Dispositif (1) d'amortissement de chocs selon l'une des revendications précédentes, **caractérisé en ce que** la cage (2) est constituée d'un matériau viscoélastique, de préférence en polymère viscoélastique.

5. Dispositif (1) d'amortissement de chocs selon l'une des revendications précédentes, **caractérisé en ce que** la cage (2) est réalisée en matériau thermoformable.

6. Dispositif (1) d'amortissement de chocs selon l'une des revendications précédentes, **caractérisé en ce que** la cage (2) présente une structure composite comportant au moins deux couches.

7. Dispositif (1) d'amortissement de chocs selon l'une des revendications précédentes, **caractérisé en ce qu'**une couche de la cage (2) est réalisée dans un matériau anti friction.

8. Dispositif (1) d'amortissement de chocs selon l'une des revendications précédentes, **caractérisé en ce qu'**il comporte un organe de freinage agencé pour modifier le jeu (7) entre la protubérance (5) et la cage (2).

9. Dispositif (1) d'amortissement de chocs selon la revendication précédente **caractérisé en ce que** l'organe de freinage est un actionneur piézoélectrique.

10. Pièce d'horlogerie comportant un dispositif (1) d'amortissement de chocs selon l'une des revendications 1 à 9.

11. Procédé de fabrication d'un dispositif (1) d'amortissement de chocs selon l'une des revendications 1 à 9, comportant les étapes suivantes :
i. former une butée (3) comportant une tige (4) et une protubérance (5) solidaire d'une extrémité de ladite tige,
ii. revêtir la protubérance (5) et au moins une portion de la tige (4) d'un matériau soluble sélectivement (10, 11) par rapport au matériau formant la protubérance (5),
iii. Plonger la butée (3) dans une quantité déterminée d'une matière fluide durcissable (12) jusqu'à recouvrir la protubérance (5) et la au moins une portion de la tige (4) revêtues d'un matériau soluble sélectivement,
iv. Solidifier la matière durcissable (12) pour former une cage (2) autour de la protubérance (5) et du matériau soluble sélectivement (10, 11) de telle sorte que la tige (4) de la butée (3) soit saillante par rapport à ladite cage,
v. dissoudre sélectivement le matériau soluble (10, 11).

12. Procédé de fabrication selon la revendication précédente, **caractérisée en ce que** l'épaisseur du matériau soluble (10, 11) déposée à l'étape ii) est comprise entre 1 et 500 microns.

13. Procédé de fabrication selon la revendication 11 ou 12, **caractérisée en ce qu'**elle comporte en outre une étape de formation d'une couche de revêtement autour du matériau soluble sélectivement intervenant avant l'étape iii ).

14. Pièce intermédiaire obtenue après l'étape ii) du procédé de fabrication selon la revendication 11.

15. Pièce intermédiaire obtenue après l'étape iii) du procédé selon la revendication 16, comportant une butée (3) munie d'une protubérance (5) revêtue d'un matériau soluble sélectivement et comportant en outre une cage (2) noyant la protubérance (5) et le matériau soluble sélectivement (10, 11).
